# EUROPÄISCHE PATENTANMELDUNG

(11) **EP 0 734 110 A1**
(43) Veröffentlichungstag der Anmeldung: **25.09.1996**
(21) Anmeldenummer: 96103830.4
(22) Anmeldetag: 12.03.1996
(51) Int. Cl.: H02J 4/00

(54) **Drahtloses Energie-Übertragungssystem**

(30) Priorität: 24.03.1995 DE 19510780
(71) Anmelder: KLAIPEDOS UNIVERSITETAS, 5800 Klaipeda (LT)
(72) Erfinder: Malkevicius, Stasys, 5800 Klaipeda (LT)
(74) Vertreter: Rother, Bernhard, Dr.-Ing.

(57) **Zusammenfassung**

2.1 Die Energieversorgung von bewegten Verbrauchern, insbes. von Transportmitteln mit eigenem elektrischen Antrieb, erfolgt über Stromzuführungsleitungen und -abnehmern elektomagnetisch oder über Batterien. Die Nachteile dieser Energieübertragung sind die starre Verbindung zu den Energieleitungen bzw. große Massen, schlechte Manöverierfähigkeit, kurze Betriebszeit der verwendeten Batterien als Energiequelle und fehlendes Versorgungsnetz von stationären Energiequellen für das Nachladen der eingesetzten Batterien.
2.2 Um hier Abhilfe schaffen, ist das Problem eines drahtloses ELetroenergie-Übertragungssystem zu lösen, das die Energieversorgung, insbes. bei Transportmitteln verbessert.
   Erfindungsgemäß besteht das drahtlose Elektroenerie-Übertragungs-system für das Transportmittel aus längs einer Strecke geführte Leitungen 1;2, die an die stationäre Energiequelle 12 ange-schlossen sind. Die Leitung 1 ist entlang der Strecke an Masten 3 mittels Isolatoren 4 befestigt; die Leitung 2 ist entlang der Strecke in der Straße 5 unterhalb des Transportmittels 6 ver-legt. Im Transportmittel 6 sind je zwei Laser mit Stromabnahmer-kontakten 7;8 und der elektrische Antrieb 13, zu dem Steuerungs- und Kontrollgeräte 14 auch die Batterie 15 gehört, angeordnet.
   Die Laserstrahlen (10;11) und/oder die Hilfshochspannungsquelle (16) sowie die Spritzeinrichtung 18 formieren den leitenden Kanal, der die Stromkreise der stationäreren Energiequelle (12) und des Antriebs (13) schließt. Die Hilfshochspannungsquelle (16) und speisende Stromkreise werden durch elektrische Filter (17) getrennt.
2.3. Die Erfindung ist für Transportmittel ökologisch verträglich einsetzbar. Weiterhin kann sie auch zur Beseitigung von Hindernissen genutzt werden.

## Beschreibung

Die Erfindung betrifft ein drahtloses Elektroenergie-Übertragungssystem von einer Energiequelle bis zu einem Energieverbraucher über einen ionisierten Kanal in umgebender Luftschicht.

Bekannt ist die drahtlose Übergabe von Elektroenergie mit Hilfe elektromagnetischer Wellen ("Lietuviskoje Tarybine Enciklopedija", Verlag Mokslas, 1978 Bd. 9, S.290). In diesem Falle der drahtlosen Übergabe mit Hilfe der elektro-magnetischer Wellen gelangt ein sehr kleiner Teil der Energie von der Energiequelle zu dem Verbraucher.

Außerdem ist in der Zeitschrift "Mokslas ir gyvenimas" (Wissenschaft und das Leben), 1993, Heft 4 S. 35 unter dem Titel "Sviesos zaibolaidis" ("Der Lichtblitzableiter") die Ionisierung eines Kanals in umgebender Luft mittels des Laserstrahls, der als Blitzableiter bei der Entladung der Gewitterwolken dienen kann, beschrieben worden. Hierbei wird nur die Entladung solcher Ladungen ermöglicht, die eine sehr hohe Spannung besitzen.

Als bekanntes Beispiel wird ein Bogenstromabnehmer für eine elektrische Lokomotive genannt, der auf einem Hubrahmen montiert ist und abgehoben werden muß, um den Lichtbogen zu zünden, vergl. SU-Patentschrift Nr.: 1 383 660, B 60 L 5/00. Mittels dieses Stromabnehmers wird der Strom bei schneller Fahrt der Lokomotive aus der Zuleitung mit Hilfe des Lichtbogens geliefert, ohne jedoch einen direkten Kontakt der Stromabnehmers mit der Zuleitung zu haben. Der Nachteil hierbei ist die kleine Übertragungsstrecke.

Der Hauptnachteil der drei genannten Beispiele besteht darin, daß sie das Problem der drahtlosen Energieübertragung nur teilweise lösen. Die Erfindung will hier Abhilfe schaffen.

Der im Anspruch angegebenen Erfindung liegt das Problem zugrunde, ein drahtloses Elektroenergie-Übertragungssystem zu schaffen, das die Nachteile der genannten Beispiele beseitigt und den Anwendungsbereich der Elektroenergie-Übertragungstechnik erweitert.

Dieses Problem wird durch die in den Ansprüchen aufgeführten Merkmale des drahtlosen Elektroenergie-Übertragungssystem gelöst.

Erfindungsmäß ist vorgesehen, einen Laser und/oder eine Spritzeinrichtung, die mit großem Druck und Geschwindigkeit die Stoffteilchen, z.B. Wasserteilchen (-tröpfchen), in Richtung der zu versorgenden Energieverbraucher ausspritzt, für die Erzeugung eines Übertragungskanals zu verwenden.

Zur Erhöhung des Ioneneffektes können gleichzeitig Laserstrahlen und eine Spritzeinrichtung benutzt werden. Dadurch werden in der umgebenden Luftschicht lange, leitende, ionisierte Kanäle erzeugt, über die beispielsweise ein elektrische Antrieb eines Transportmittels gespeist werden kann.

Um die Masse und auch die Leistung des Lasers zu verringern, sind folgende Möglichkeiten vorgesehen:
1. die Anordnung einer Hilfshochspannungsquelle, die eine kleine Leistung besitzt; sie hat die Aufgabe, die nichtleitenden Bereiche des Laserplasmas elektrisch durchzuschlagen. Das erleichtert die Ausbildung (Formierung) eines leitenden Kanals. Die Trennung des Leistungsstromkreises von der Hilfshochspannungsquelle erfolgt durch Filter, z.B. ein Resonanzfilter.
2. die Anordnung von Laser und Hilfshochspannungsquelle. so daß Energiequelle und Energieverbraucher synchron im Pulsbetrieb arbeiten. Die Energieübertragung wird periodisch, impulsweise mit dem Laser und den Entladungen der Hilfshochspannungsquelle über den leitenden Kanal verwirklicht.

Die Vorteile bestehen insbesondere darin, daß die Erfindung die Möglichkeit schafft, die Energieversorgung für normalerweise unerreichbare Objekte, z.B. sich bewegende Transportmittel, zu gewährleisten. Dadurch eröffnet sich Möglichkeit, elektrische Antriebe von Transportmitteln ökologisch günstiger zu gestalten.

Weiterhin ermöglicht die Erfindung, die drahtlose Elektroenergieübertragung derart zu nutzen, daß sie an oder auf Luft-, Land- oder Wasserfahrzeugen mit dem Ziel Gegenstände, insbesondere Hindernisse zu zerstören oder zu beseitigen, angeordnet werden kann.

Die Erfindung wird anhand von zwei Ausführungsbeispielen näher erläutert.

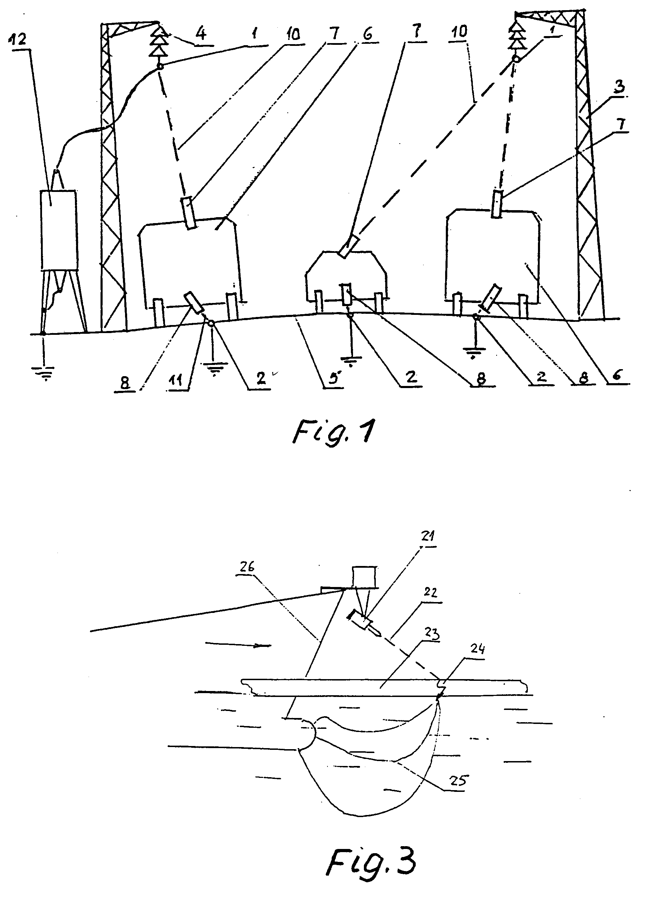

Es zeigen:
Fig. 1: einen schematisch dargestellten Querschnitt des drahtlosen Elektroenergie-Übertragungssystem für ein Verkehrsmittel auf dreispuriger Straße,
Fig. 2: ein Blockschaltbild des Funktionsprinzips des drahtlosen Elektroenergie-Übertragungssystem für ein Verkehrsmittel gemäß Fig 1,
Fig. 3: ein schematische Darstellung des drahtlosen Elektroenergie-Übertragungssystem, montiert auf dem Bug eines Eisbrechers
Nach Figur 1 besteht das drahtlose Elektroenergie-Übertragungssystem aus längs der Strecke geführte Leitungen 1;2. Die Leitung 1 ist entlang der Strecke an Masten 3 mittels Isolatoren 4 befestigt; die Leitung 2 ist entlang der Strecke in der Straße (Erdboden) 5 unterhalb des Transportmittels 6 verlegt. Im Transportmittel 6 sind, in der Figur nicht näher dargestellt, je zwei Laser mit den Kontakten der Stromabnahmer 7;8 angeordnet.

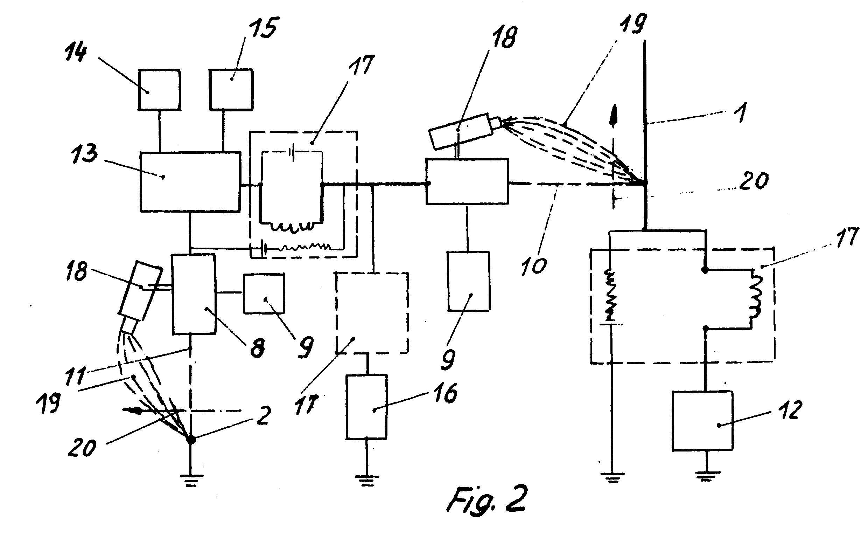

Diese Kontakte 7;8 werden zusammen mit den Laserstrahlen 10;11 mittels einer automatischen Strahlsteuereinrichtung 9 (vergl. Fig. 2) auf die Leitungen 1;2 mit gegensätzlicher Polarität orientiert. Die Leitungen 1;2 sind an die Energiequelle 12 angeschlossen.

Gemäß Fig. 2 besitzt das Transportmittel 6 einen elektrischen Antrieb 13, zu dem Steuerungs- und Kontrollgeräte 14 auch die Batterie 15 gehört.

Die Wirkungsweise ist folgende:
Die elektrische Spannung der Energiequelle 12 wird über elektrische Filter 17 zwischen die beiden Leitungen 1;2 angelegt. Die automatische Strahlsteuereinrichtung 9 richtet die Laserstrahlen 10;11 über eine schmale Öffnung der Stromabnehmerkontakte 7;8 direkt zu den beiden energieeinspeisenden Leitungen 1;2. Die dünnen Laserstrahlen 10:11 ionisieren die umgebenden Luftschicht der Atmosphäre und erzeugen (formieren) somit leitende Kanäle zwischen den Stromabnehmerkontakten 7;8 und den energiespeisenden Leitungen 1;2. Der erzeugte leitende Kanal verbindet die Energiequelle 12 mit dem Antrieb 13, und der Antrieb 13 beginnt zu funktionieren (laufen).

Zum Antrieb 13 gehören neben den Steuer- und Kontrollgeräten 14 auch eine Batterie 15, die automatisch zu der Energiequelle wird, wenn für eine kurze Zeit die Energieübertragung von der stationären Energiequelle 12 abbricht oder wenn das Transportmittel 6 die Straße 5, in der die Leitungen 1;2 verlegt sind, beispielweise beim Abbiegen, verläßt.

Um die Masse und auch Leistung des Lasers zu verringern, ist eine Hilfshochspannungsquelle 16 mit kleiner Leistung aber hoher Spannung ausgelegt. Die Spannung dieser Hilfshochspannungsquelle 16 wird an den leitenden Kanälen zwischen den energiespeisenden Leitungen 1;2 und den Stromabnehmerkontakten 7:8 angelegt, um damit entlang des Laserplasmas, das eine diskrete Struktur besitzen kann, einen elektrischen Durchschlag zu erreichen und einen ununterbrochenen leitenden Kanal in der umgebenden Luftschicht der Atmosphäre zu bilden.

Es ist praktisch möglich und experimentiell nachgewiesen, daß das elektrische Stimulieren den optischen Durchschlag der umgebenden Luftschicht der Atmosphäre erleichtert und wesentlich zur Verminderung der Leistung der Laseranlage führt.

Nach einem weiteren Merkmal der Erfindung erreicht man dieselbe Wirkung durch einen elektrischen Antrieb 13 im Pulsbetrieb. In diesem Falle ist es möglich, anstelle eines Dauerlasers einen Impulslaser zu verwenden.

Während des Laserimpulses, der gleichzeitig (synchronisiert) mit dem Durchschlag der Hilfshochspannungsquelle 16 die leitenden Kanäle erzeugt, fließt der Strom periodisch von der stationären Energiequelle 12 zu dem elektrischen Antrieb 13 des Transportmittels 6.

Um die Bildung der leitenden Kanäle zu erleichtern, ist eine Spritzeinrichtung 18 vorgesehen. Diese spritzt leitende Teilchen 19, z.B. Wassertröpfchen, mit großem Druck und Geschwindigkeit in die Richtung der energieversorgenden Leitungen 1;2. Diese leitenden Teilchen sind Träger des elektrischen Stromes und erleichtern den elektrischen Durchschlag entlang der Laserstrahlen 10;11. Dieser Wassertröpfchenstrom kann als ionisierendes Mittel ohne Laser verwendet werden; deshalb ist er genauso wie der Laser als selbständiges Merkmal dieser Erfindung zu betrachtet.

Nach Figur 3 ist das drahtlose Elektroenergie-Übertragungssystem 21 gemäß des Ausführungsbeispiels eins auf dem Bug eines Eisbrechers mit dem Ziel der Zerstörung der vorausliegenden, geschlossenen Eisdecke montiert. Ein nach vorn zur Eisdecke gerichteter leitender Kanal 22 legt zwischen der Eisoberfläche 23 und dem Wasser 25 eine Hilfsspannung an. Die hohe Spannung durchschlägt die Eisschicht 23 und schließt damit über den leitenden Kanal 22 den Durchschlag durch das Wasser 24, das Wasser 25 und den Schiffskörper 26 den Starkstromkreis. Der nun fließende Strom bringt das Eis zum Schmelzen. Die Richtung des leitenden Kanals 22 wird beim Fahren des Eisbrechers so eingestellt, daß das Eis in beliebige Stücke getrennt wird. Der Eisbrecher kann die gebrochene Eisdecke durchfahren.

### Bezugszeichenliste

- 1: Leitung
- 2: Leitung
- 3: Mast
- 4: Isolator
- 5: Straße / Erdboden
- 6: Transport-(Verkehrs)mittel
- 7: oberer Stromabnehmerkontakt
- 8: unterer Stromabnehmerkontakt
- 9: automatische Strahlsteuereinrichtung
- 10: Laserstrahl
- 11: Laserstrahl
- 12: stationäre Energiequelle
- 13: elektrischer Antrieb
- 14: Steuerungs- und Kontrollgerät
- 15: Batterie
- 16: Hilfshochspannungsquelle
- 17: Filter
- 18: Spritzeinrichtung
- 19: Teilchen/ Wassertröpfchen
- 20: Trajekt-Ebene
- 21: drahtlose Elektroenergie-Übertragungsanlage
- 22: Kanal
- 23: Eisoberfläche
- 24: Durchschlag
- 25: Wasser
- 26: Schiffskörper des Eisbrechers

## Patentansprüche

1. Drahtloses Elektroenergie-Übertragungssystem, das aus elektrischer Energiequelle, elektrischem Energieverbraucher und drahtlosen Übertragungskanal besteht, dadurch gekennzeichnet, daß zur Erzeugung eines Übertragungskanals Laser benutzt wird, deren Strahlen (10;11) den Stromfluß zwischen elektrischer Energiequelle und elektrischen Energieverbraucher gewährleisten.

2. Drahtloses Elektroenergie-Übertragungssystem, das aus elektrischer Energiequelle, elektrischem Energieverbraucher und drahtlosen Übertragungskanal besteht, dadurch gekennzeichnet, daß zur Erzeugung eines Übertragungskanals Spritzeinrichtungen (18) benutzt werden, deren Stoffteilchen den Stromfluß zwischen den elektrischen Energiequellen und den elektrischen Energieverbrauchern gewährleisten.

3. Drahtloses Elektroenergie-Übertragungssystem, nach Anspruch 1 oder/und 2, dadurch gekennzeichnet, daß zur Erzeugung von Übertragungskanälen Spannungen von Hilfshochspannungsquellen (16) an die Ausgänge der elektrischen Energiequellen (12) und die Stromabnehmerkontakte (7;8) der Verbraucher gelegt und die Kreise der Hilfshochspannungsquellen (16) von den Kreisen der elektrischen Energiequellen (12) mittels elektrischer Filter (17) voneinander getrennt sind.

4. Drahtloses Elektroenergie-Übertragungssystem nach Anspruch 3, dadurch gekennzeichnet, daß Laser und Hilfshochspannungsquellen (16) synchron in ihrer Intensität verändert werden und in Verbindung mit den elektrischen Energiequellen im Pulsbetrieb arbeiten.

5. Drahtloses Elektroenergie-Übertragungssystem nach Anspruch 3 oder 4, dadurch gekennzeichnet, daß die Emissionsrichtung der Laser und/oder die Spritzrichtungen der Stoffteilchen von Hand oder automatisch verändert und somit die Übertragungs-richtung zwischen elektrischen Energiequellen und elektrischen Verbrauchern gezielt verändert werden.

6. Drahtloses Elektroenergie-Übertragungssystem nach Anspruch 5, dadurch gekennzeichnet, daß das Elektroenergieübertragungssystem auf einem Verkehrsmittel (6) mit elektrischem Antrieb (13) derart angeordnet ist, daß die mit ihm erzeugten Energie-Übertragungskanäle (10;11) in Richtung der entlang der Straße angeordneten und durch stationäre Energiequelle (12) versorgte Leitungen (1;2) orientiert sind.

7. Drahtloses Elektroenergie-Übertragungssystem nach Anspruch 3 oder 4 oder 5, dadurch gekennzeichnet, daß das Elektroenergie-Übertragungssystem auf dem Bug eines Eisbrechers (26) montiert ist, einen leitenden Übertragungskanal (22) nach voraus gerichtet auf die geschlossene Eisoberfläche (23) erzeugt, daß dieser auch jeder Fahrrichtungsänderung folgt, daß dieser bei Kontakt mittels Hilfshochspannungsquelle (16) die Eisschicht (23) elektrisch durchschlägt und schließt damit über den Verlauf des Durchschlages (24), über den Übertragungskanals (22) auch über das Wasser den Starkstromkreis zu, so daß die Eisschicht (23) in Stücke geteilt wird.
